# FASCICULE DE BREVET EUROPEEN

(11) **EP 4 267 861 B1**
(45) Date de publication et mention de la délivrance du brevet: **08.01.2025**
(21) Numéro de dépôt: 21819838.0
(22) Date de dépôt: 25.11.2021
(51) Int. Cl.: F16B 25/00, F16B 25/10

(54) **FIXATION POUR MUR RIDEAU**
AUFSATZ FÜR EINE VORHANGFASSADE
ATTACHMENT FOR CURTAIN WALL

(30) Priorité: 23.12.2020 FR 2014035
(43) Date de publication de la demande: 01.11.2023
(73) Titulaire: Ateliers LR Etanco, 78230 Le Pecq (FR)
(72) Inventeur: TOLLERET, Philippe, 95880 ENGHIEN LES BAINS (FR)
(74) Mandataire: LLR
(86) Numéro de dépôt international: PCT/EP2021/083041
(87) Numéro de publication internationale: WO 2022/135826

(56) Documents cités:
- EP-A1- 3 199 824
- FR-A- 1 337 151

## Description

La présente invention se rapporte au domaine des murs rideaux. Il se rapporte plus particulièrement au mode de fixation d'un mur rideau à la structure d'un bâtiment. Cette structure est généralement un mur en béton ou en parpaings.

Les murs rideaux ont une charpente faite de profilés métalliques, généralement en aluminium, reliée à la structure du bâtiment par des pièces de liaison. Ces pièces sont généralement métalliques et souvent en forme d'équerre. Les coefficients de dilatation du béton et de l'aluminium sont nettement différents. Cette différence est renforcée par la différence d'exposition aux températures, le béton étant protégé par le mur rideau de l'exposition directe aux intempéries et aux rayons solaires. Il convient donc que le mode de fixation de la charpente sur la structure permette la dilatation de la charpente relativement à la structure.

Pour permettre cette dilatation relative, l'art antérieur prévoit de fixer le profilé sur la pièce de liaison à l'aide de vis spéciales.

Ainsi, le document EP3199824A1 (SFS) décrit une vis dont le filet a un diamètre réduit à proximité de la tête de la vis, afin de ne pas venir en prise avec le profilé.

Le document EP3564464A1 (SFS) décrit quant à lui un système plus complexe utilisant un manchon monté sur la vis.

D'autres systèmes de l'art antérieur utilisent des vis comprenant un filetage muni d'un arrêt franc, côté tête, et une partie lisse entre la tête et l'arrêt franc. La pièce de liaison et le profilé sont traversés par la partie lisse et l'arrêt franc sert de butée, de sorte que la pièce de liaison et le profilé sont maintenus entre la tête de la vis et l'arrêt franc. Cependant, il est difficile de maîtriser la distance entre la tête de la vis et l'arrêt franc ; ainsi, un jeu fonctionnel doit être prévu sur la partie lisse, de sorte que la pièce de liaison et le profilé sont mal maintenus entre eux.

Le but de l'invention est de proposer un système de fixation simple qui assure un bon maintien du profilé sur la pièce de liaison, en même temps qu'il permette une dilatation du profilé.

Selon l'invention, une vis pour fixer un profilé d'une charpente métallique à une pièce destinée à relier ce profilé à une structure d'un bâtiment, comprend une tête et une tige, un premier filet ayant un premier diamètre et en outre un deuxième filet ayant un deuxième diamètre inférieur au premier diamètre, la vis comprenant une première zone filetée où les filets coexistent et une deuxième zone filetée, située entre la première zone et la tête, où seul le deuxième filet demeure, de sorte que le deuxième filet s'étend au-delà du premier filet en direction de la tête.

Une telle vis est avantageusement une vis auto-foreuse. La tête de la vis peut comprendre une prise hexagonale. De préférence, la tête comprend une collerette entre une prise et la tige.

Selon un deuxième objet de l'invention, un procédé pour fixer un profilé d'une charpente métallique à une pièce destinée à relier ce profilé à une structure d'un bâtiment, cette pièce comprenant une aile percée d'un trou oblong (17), durant lequel on fournit une vis dont une distance franche, mesurée entre le premier filet et la tête de la vis, est supérieure ou égale à la somme d'une épaisseur dudit profilé et d'une épaisseur de l'aile à l'emplacement de la vis et dont le diamètre du premier filet est inférieur à une largeur de ce trou, puis, on introduit la vis au travers du trou, puis, on visse la vis au travers du profilé jusqu'à ce que l'aile soit pincée entre la tête de la vis et le profilé, et, que le deuxième filet s'émousse.

Plusieurs modes d'exécution de l'invention seront décrits ci-après, à titre d'exemples non limitatifs, en référence aux dessins annexés dans lesquels :
[Fig. 1] est une vue longitudinale d'une vis selon l'invention pour fixer un profilé de mur rideau sur une pièce pour relier le profilé à la structure d'un bâtiment ; et,
[Fig. 2] est une vue de la vis de la figure 1, en prise sur une pièce de liaison et un profilé.

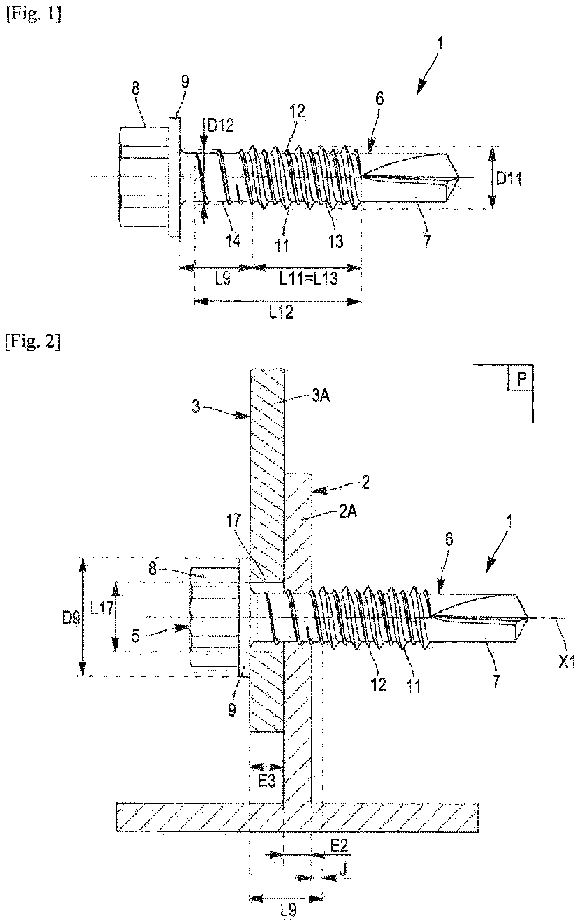

Les figures 1 et 2 illustrent une vis 1 pour fixer un profilé 2 sur une pièce de liaison 3. La vis s'étend longitudinalement selon un axe X1.

La figure 2 illustre la vis 1 en position d'usage. Son axe longitudinal X1 est horizontal et le plan de la figure 2 est un plan horizontal P qui comprend l'axe longitudinal X1 de la vis. Le profilé 2 et la pièce de liaison 3 sont représentés coupés selon le plan P. Le profilé 2 s'étend verticalement, c'est-à-dire perpendiculairement au plan P de la figure 2, de sorte qu'il y est représenté en section transversale. Dans l'exemple illustré, la section horizontale, et transversale, du profilé 2 a une forme de T. La pièce de liaison 3 a une section horizontale en forme d'équerre dont seule une aile 3A est partiellement représentée à la figure 2. Une âme 2A du profilé 2 est maintenue contre l'aile 3A de la pièce de liaison 3, à l'aide de la vis 1.

La vis 1 comprend une tête 5 et une tige 6 qui s'étend axialement, selon l'axe longitudinal X1, depuis la tête 5. La vis est une vis auto-foreuse ; l'extrémité distale 7 de la tige a une forme de foret.

La tête 5 comprend une prise hexagonale 8 et, côté tige, une collerette 9. La vis est à double filet de type hi-low, c'est-à-dire que la tige comprend un filetage constitué de deux filets 11, 12 entrelacés.

Comme particulièrement illustré à la figure 1, la tige 6 porte un premier filet 11 de diamètre extérieur D 11 et un deuxième filet ayant un diamètre D12 (dit « low », d'après le terme anglais) inférieur au diamètre D11 (dit « hi », d'après l'anglais high) du premier filet (soit, D12<D11).

Le deuxième filet 12 s'étend au-delà du premier filet 11, en direction de la tête 5. Ainsi, il existe une première zone filetée 13 de la tige 7 où les deux filets 11, 12 coexistent et une deuxième zone filetée 14 de la tige 7, entre la première zone 14 et la tête, qui ne porte que le deuxième filet 13.

Dans l'exemple illustré, le premier filet 11 s'étend sur une longueur L11 de la tige, depuis l'extrémité foreuse 7 en direction de la tête 5. Le deuxième filet 12 s'étend sur une longueur L12 de la tige, depuis l'extrémité foreuse 7 en direction de la tête 5. La première zone a une longueur L13 sensiblement égale à la longueur L11 du premier filet 11, mesurée axialement. La deuxième zone 14 a une longueur L14 sensiblement égale à la longueur à la différence des longueur L12-L11 des deux filets 11, 12, mesurées axialement. La tête 5 comprend en outre un profil de raccordement 16 de la collerette 9 à la tige 7, en quart de cercle. La première zone 13 est séparée de la collerette par une distance franche L9 supérieure à la longueur L14 de la deuxième zone 14. La distance franche est mesurée sans tenir compte de la partie « mourante » du premier filet 11, c'est-à-dire entre le premier filet, là où il a son diamètre courant et le collerette 9.

Dans l'exemple illustré l'âme 2A et l'aile 3A ont des épaisseurs respectivement notées E2 et E3. La distance franche L9 est supérieure à la somme de ces deux épaisseurs, c'est-à-dire que L9 > E2+E3.

Comme illustré à la figure 2, la pièce de liaison est pré-percée d'un trou 17. Il a une largeur L17, mesurée horizontalement, dans le plan P de la figure, supérieure au diamètre D11 du premier filet 11 et inférieur au diamètre D9 de la collerette 9 (D11<D17<D9). Le trou est oblong, c'est-à-dire qu'il a une longueur, mesurée verticalement supérieure à la largeur L17.

La profilé 2 n'est pas pré-percé ; c'est la vis 1, lors de son vissage, qui fore et taraude le profilé, respectivement à l'aide de l'extrémité 7 et à l'aide des filets 11, 12.

On va maintenant décrire un procédé pour fixer un profilé d'une charpente métallique sur une structure d'un bâtiment, utilisant une vis selon l'invention, en référence à la figure 2.

On positionne l'âme 2A contre l'aile 3A. On introduit la vis dans le trou 17 de la pièce 3 et on la visse dans l'âme 3A, de sorte que l'aile 3A est disposée entre l'âme 2A et la tête 5 de la vis 1.

On note que la distance franche L9 étant supérieure à la somme E2+E3 des épaisseurs de l'aile et de l'âme, le premier filet 11 échappe de l'âme, de sorte que l'âme n'est plus en prise qu'avec le deuxième filet 12. En continuant à visser la vis 1, le deuxième filet 12 tend à entraîner l'âme 2A en direction de la tête, jusqu'à ce que l'aile 3A vienne en butée contre la collerette 9 et soit pincée entre cette collerette et l'âme 2A, dans la position, de la figure 2. Dans cette position, un jeu longitudinal J est créé entre l'aile 2A et le premier filet 11, tel que J = L9 - E2 - E3.

Lorsqu'on continue à visser, le deuxième filet 12 étant faible relativement à la résistance exercée par le métal de l'aile 2A, la vis continue à tourner sur elle-même en même temps que le deuxième filet 12 « foire », c'est-à-dire qu'il s'émousse, avant que l'opérateur chargé du vissage s'en rende compte.

Cette disposition finale constitue une position d'assemblage du système constitué par le profilé 2, la pièce de liaison 3 et la vis 1.

Dans cette position, la partie résiduelle du deuxième filet 12 exerce une prise longitudinale résiduelle sur l'aile 2A, selon l'axe longitudinal X de la vis 1. Cette prise résiduelle assure un maintien glissant verticalement de l'aile 3A entre la collerette 9 et l'âme 2A. Ceci permet un déplacement vertical du profilé, lorsqu'il se dilate, relativement à l'aile 3A, guidé par la vis 1 dans le trou oblong 17. La pièce 3 étant fixée à la structure d'un bâtiment, la disposition finale permet une dilatation de la charpente métallique relativement à la structure, plus rigide, du bâtiment.

Une extrémité proximale du premier filet 11 constitue une butée qui maintient la vis en prise avec le profil 2 et la pièce de liaison 3, au cas où la prise résiduelle sur le deuxième filet 12, émoussé, ne soit pas suffisante. Bien entendu, plusieurs vis 1 sont ainsi montées sur un même profilé, de sorte qu'un maintien convenable en est assuré.

La possibilité d'un jeu longitudinal J, autorisé par la présence du deuxième filet 11, permet de s'assurer que malgré des tolérances de fabrication peu contraignantes, la vis 1 a toujours une distance franche L9 au moins égale à la somme des épaisseurs E2, E3 de l'âme 2 et de l'aile 3.

Dans une version préférée du système de la figure 2, aux tolérances de fabrication près, on a les dimensions théoriques suivantes :
D11 = 5,5 millimètres environ ;
D12 = 4,8 millimètres environ ;
L11 = 10 millimètres environ ;
L9 = 6 millimètres environ ;
E2 = 2,5 millimètres environ ; et,
E3 = 2,5 millimètres environ ; d'où,
J = 1 millimètres environ.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, une vis selon l'invention peut comprend plus de deux filets. Par exemple, une telle vis peut comprendre trois ou quatre filets ; par exemple deux filets « hi » alternant avec deux filets « low ».

## Revendications

1. Vis (1) pour fixer un profilé (2) d'une charpente métallique à une pièce (3) destinée à relier ledit profilé à une structure d'un bâtiment, **caractérisée en ce qu'**elle comprend une tête (5) et une tige (6), un premier filet (11) ayant un premier diamètre (D11) et en outre un deuxième filet (12) ayant un deuxième diamètre (D12) inférieur audit premier diamètre (D11), ladite vis comprenant une première zone filetée (13) où lesdits filets (11, 12) coexistent et une deuxième zone filetée (14), située entre ladite première zone (13) et la tête (5), où seul ledit deuxième filet demeure, de sorte que ledit deuxième filet s'étend au-delà dudit premier filet en direction de ladite tête.

2. Vis selon la revendication 1, **caractérisée en ce qu'**elle est une vis auto-foreuse.

3. Vis selon l'une des revendications 1 et 2, **caractérisée en ce que** la tête comprend une prise (8) hexagonale.

4. Vis selon l'une des revendications 1 à 3, **caractérisée en ce que** la tête comprend une collerette (9) entre une prise et la tige.

5. Procédé pour fixer un profilé (2) d'une charpente métallique à une pièce (3) pour relier ledit profilé à une structure d'un bâtiment, ladite pièce comprenant une aile (3A) percée d'un trou oblong (17), **caractérisé en ce que** l'on fournit une vis (1) selon l'une des revendication 1 à 4 dont une distance franche (L9), mesurée entre le premier filet (11) et la tête de la vis, est supérieure ou égale à la somme d'une épaisseur (E2) dudit profilé (2A) et d'une épaisseur (E3) de l'aile (3) à l'emplacement de la vis (1) et dont le diamètre du premier filet (D11) est inférieur à une largeur (17) dudit trou, puis, que l'on introduit ladite vis au travers dudit trou, puis, que l'on visse ladite vis au travers dudit profilé jusqu'à ce que ladite aile soit pincée entre la tête de ladite vis et ledit profilé, et, que le deuxième filet (12) s'émousse.

## Patentansprüche

1. Schraube (1) zum Befestigen eines Profils (2) eines Metallgerüsts an einem Teil (3), das dazu bestimmt ist, das Profil mit einer Struktur eines Gebäudes zu verbinden, **dadurch gekennzeichnet, dass** sie einen Kopf (5) und einen Schaft (6), ein erstes Gewinde (11) mit einem ersten Durchmesser (D11) und außerdem ein zweites Gewinde (12) mit einem zweiten Durchmesser (D12), der kleiner als der erste Durchmesser (D11) ist, aufweist, wobei die Schraube einen ersten Gewindebereich (13), in dem die Gewinde (11, 12) nebeneinander bestehen, und einen zweiten Gewindebereich (14) aufweist, der sich zwischen dem ersten Bereich (13) und dem Kopf (5) befindet, in dem nur das zweite Gewinde verbleibt, so dass sich das zweite Gewinde über das erste Gewinde hinaus in Richtung des Kopfes erstreckt.

2. Schraube nach Anspruch 1, **dadurch gekennzeichnet, dass** sie eine selbstbohrende Schraube ist.

3. Schraube nach einem der Ansprüche 1 oder 2, **dadurch gekennzeichnet, dass** der Kopf eine Sechskantaufnahme (8) aufweist.

4. Schraube nach einem der Ansprüche 1 bis 3, **dadurch gekennzeichnet, dass** der Kopf einen Flansch (9) zwischen einer Buchse und dem Schaft aufweist.

5. Verfahren zum Befestigen eines Profils (2) eines Metallgerüsts an einem Teil (3) zum Verbinden des Profils mit einer Struktur eines Gebäudes, wobei das Teil einen Flügel (3A) aufweist, der von einem Langloch (17) durchbohrt ist, **dadurch gekennzeichnet, dass** eine Schraube (1) nach einem der Ansprüche 1 bis 4 bereitgestellt wird, von der ein freier Abstand (L9), gemessen zwischen dem ersten Gewinde (11) und dem Kopf der Schraube, größer oder gleich der Summe einer Dicke (E2) des Profils (2A) und einer Dicke (E3) des Flügels (3) an der Stelle der Schraube (1) ist und deren Durchmesser des ersten Gewindes (D11) kleiner als eine Breite (17) des Lochs ist, und dann, die Schraube durch das Loch eingeführt wird, dann die Schraube durch das Profil geschraubt wird, bis der Flügel zwischen dem Kopf der Schraube und dem Profil eingeklemmt wird, und das zweite Gewinde (12) stumpf wird.

## Claims

1. Screw (1) for fixing a section (2) of a metal framework to a part (3) intended to connect the said section to a structure of a building, **characterized in that** it comprises a head (5) and a shank (6), a first thread (11) having a diameter of diameter (D11) and further a second thread (12) having a second diameter (D12) smaller than said first diameter (D11), said screw comprising a first threaded area (13) where said threads (11, 12) coexist and a second threaded area (14), located between said first area (13) and the head (5), where only said second thread remains, so that said second thread extends beyond said first thread towards said head.

2. A screw according to claim 1, **characterized in that** it is a self-drilling screw.

3. Screw according to one of claims 1 and 2, **characterized in that** the head comprises a hexagonal socket (8).

4. Screw according to one of claims 1 to 3, **characterized in that** the head comprises a collar (9) between a socket and the shank.

5. Method for fixing a section (2) of a metal framework to a part (3) for connecting said section to a structure of a building, said part comprising a flange (3A) pierced with an oblong hole (17), **characterized in that** there is provided a screw (1) according to one of claims 1 to 4, a clear distance (L9) of which, measured between the first thread (11) and the head of the screw, is greater than or equal to the sum of a thickness (E2) of the said profile (2A) and a thickness (E3) of the flange (3) at the location of the screw (1), and the diameter of the first thread (D11) of which is less than a width (17) of the said hole, then that the said screw is inserted through the said hole, then that the said screw is inserted through the said flange (3A), then that the said flange (3A) is pierced with an oblong hole (17). through the said hole, then screwing the said screw through the said profile until the said screw is tightened the said wing is pinched between the head of the said screw and the said profile, and the second thread (12) is blunted.
